(19) Europäisches Patentamt / European Patent Office / Office européen des brevets

(11) **EP 2 597 817 A1**

(12) **EUROPEAN PATENT APPLICATION**

(43) Date of publication:
**29.05.2013 Bulletin 2013/22**

(51) Int Cl.:
**H04L 12/26** $^{(2006.01)}$        **H04L 12/801** $^{(2013.01)}$

(21) Application number: **11290462.8**

(22) Date of filing: **04.10.2011**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **Alcatel Lucent
75007 Paris (FR)**

(72) Inventor: **Lautenschlaeger, Wolfram
74343 Sachsenheim (DE)**

(74) Representative: **Zinsinger, Norbert et al
Louis Pöhlau Lohrentz
P.O. Box 30 55
90014 Nürnberg (DE)**

(54) **Method of determining a path quality**

(57)    The invention concerns a method for determining a path quality in a packet based communication network (100). The invention concerns also a quality accounting unit (10q) and a corresponding output line card (100). The quality accounting unit (10q) measures data rate ($d_i$) associated with the data traffic transmitted through a link (111) of the communication network (100) at an output line card (100) of a node (1) of the communication network (100). The quality accounting unit (10q) determines a hypothetical drop probability ($P_1$) of data transmitted through the link (111) based on the measured data rate ($d_i$) and data extracted from a data base (10qt), the path quality being specified by the hypothetical drop probability ($P_1$).

*Fig. 2*

**Description**

The present invention relates to a method for determining a path quality in a packet based communication network. The present invention relates also to a corresponding quality accounting unit and a corresponding output line card for determining a path quality in a packet based communication network.

Routing in communication networks is based on information about the amount of data transferred through links in the communication network. The information amount of data transferred through links can be measured for instance in bytes per second. However, this measured information does not provide information about the past utilization and past performance of the communication network; it merely provides information about the present state of the communication network. Modern communication services may be very different with respect to their requirements concerning QoS (QoS = quality of service) and the respective amount of data transferred. For instance a Voice over IP service (IP = internet protocol) requires a much higher data rate and QoS than a web client for reading NEWS or Email (Email = electronic mail) online. Since service providers do not know in advance when and how many of their service subscribers will use the services, they would have to provide a huge excess in line / link capacity in order to guarantee QoS for each of their subscribers when all of them want to use e.g. Voice over IP service at the same time. Such behavior of the subscriber may be unlikely, but could destabilize the communication network. Measuring states of the communication network, such as link loads, provide information only about the present and at best the past utilization of the communication network, since the measured data can not be evaluated in no time, and can thereby not provide a reliable path quality or path quality metric for providing a robust routing of the data through the communication network.

It is the object of the present invention to provide an improved path quality metric.

The object of the present invention is achieved by a method for determining a path quality in a packet based communication network, wherein a quality accounting unit measures a data rate associated with the data traffic transmitted through a link of the communication network at an output line card of a node of the communication network, and the quality accounting unit determines a hypothetical drop probability of data transmitted through the link based on the measured data rate and data extracted from a data base, the path quality being specified by the hypothetical drop probability. The object of the present invention is further achieved by a quality accounting unit for determining a path quality in a packet based communication network, wherein the quality accounting unit is adapted to measure a data rate associated with the data traffic transmitted through a link of the communication network at an output line card of a node of the communication network, and determine a hypothetical drop probability of data transmitted through the link based on the measured data rate and data extracted from a data base, whereby the hypothetical drop probability specifies the path quality. The object of the present invention is also achieved by an output line card for determining a path quality comprising the quality accounting unit.

Embodiments in accordance with the present invention provide a surprisingly different and effective approach - than known from the prior art - which is to determine for the path quality of the data traffic through a link of the communication network a hypothetical drop probability indicating packet drop probability of the data traffic through the link.

Embodiments according to the present invention can provide a stable long term quality indicator, i.e. the hypothetical drop probability, which can be concatenated into a path quality metric and made available to all involved parties, like end-nodes, switching nodes, routers and/or communication network services.

Embodiments according to the present invention can provide continuously to quantify the root causes of traffic degradation - load and volatility - on output line cards of packet switching nodes, like routers. It is possible, to calculate on request the hypothetical drop probability of the outgoing link and concatenate the link specific values into a path quality metric. In particular, by means of using continuously acquired statistical moments, variances and/or traffic granularities of the data traffic through the link it is possible to calculate a hypothetical drop probability specifying a path quality, not only enabling to evaluate the performance of the communication network and/or the link in the past, but also enabling to predict future traffic load and its fluctuations of the communication network and/or the link. The first moment of the data rate can provide information about the mean load of the link. Embodiments of the present invention enable an optimal and future proof design of data packet routing in the communication network.

Embodiments of the present invention can provide an improved convergence of the quality metric even in the case of essentially uncongested links of the communication network. Furthermore, embodiments of the present invention subsume the root cause of packet loss, delay spikes, and throughput degradation in one metric. Embodiments of the present invention can also provide to enable differential distinction between potential paths of the data traffic before putting the data traffic on them. It is possible that path quality acquisition is achieved in just one RTT (RTT = round trip time).

In contrast to prior art embodiments based on link bandwidth measurements without applying statistical models to evaluate the measured data rates as done by embodiments in accordance with the present invention a stable path quality metric is not available. These prior art embodiments provide slow convergence with respect the packet drop counts in comparison to embodiments in accordance with the present invention. The packet drop counts achieved by these prior art embodiments are only available in retrospect. These prior art embodiments are not able to differentiate between potential (future) path allocations. However, embodiments of the present invention are able to differentiate between potential (future) path allocations.

Further advantages are achieved by embodiments of the invention indicated by the dependent claims.

According to a preferred embodiment of the invention a byte counter of the quality accounting unit repeatedly sums bytes detected by the byte counter during a time period. A sampling module provides at the end of the time period the content of the byte counter as data rate. Preferably, the time period is 10 milliseconds. The sampling module can determine the data rate by subtracting the value of the byte counter at the end of the time period from the value of the byte counter at the beginning of the time period and dividing the result of the subtraction by the length of the time period.

According to a preferred embodiment of the invention the quality accounting unit applies a low pass filter with a time constant to the data rate and the squared data rate in order to determine a first moment and a second moment of the data rate respectively. Preferably, the time constant is 15 minutes. It is possible that the quality accounting unit applies to the low pass filtered data rate and squared data rate a down sample module in order to drastically reduce the processing frequency of subsequent units. The resulting values can be regarded as estimates of the first and second raw moments as known from mathematical statistics. The first and second moments can be determined as arithmetic mean values of the data rate and the squared data rate respectively.

According to a preferred embodiment of the invention the time period is smaller than the time constant. Preferably, the time period is a time period between 1 millisecond and 100 milliseconds. The time constant is preferably a time period between 0.5 minutes and 100 minutes.

According to a preferred embodiment of the invention the quality accounting unit calculates a variance of the data rate using the first moment and the second moment. The variance can be calculated by subtracting the square of the first moment from the second moment. The quality accounting unit determines a traffic granularity based on the ratio of the variance to the first moment. The traffic granularity is a value which can serve as a measure indicating the degree of fluctuations in the data rate of the data traffic. The traffic granularity can be determined by the ratio of the variance to the first moment of the data rate. Preferably, the first moment is the arithmetic mean value of the data rate. According to a preferred embodiment of the invention the data base provides a plurality of hypothetical drop probabilities. The data base can be service, device and/or software means which provides storing, accessing, extracting, processing and/or manipulation of data and/or data values. Preferably, the data base is and/or comprises a look-up table and/or data array. The data base can provide calculated data values, which preferably have been calculated in advance in order to provide constant data values. However, it can be possible to update one or more of these data values. Each hypothetical drop probability is assigned to two or more parameters selected from the group of first moment, second moment, variance, traffic granularity, mean data rate, link capacity, relative mean data rate and relative link capacity. The data and/or data values provided by the data base can be the two or more two or more parameters selected from the group of first moment, second moment, variance, traffic granularity, mean data rate, link capacity, relative mean data rate and relative link capacity. The quality accounting unit calculates the traffic granularity based on the measured data rate. The quality accounting unit accesses the data base and extracts from the data base the hypothetical drop probability based on parameters comprising the calculated traffic granularity and a link to the link capacity of the link. A process of accessing, extracting, processing and/or manipulation of data and/or data values can involve approximation, interpolation and/ extrapolation of data and/or data values provided by the data base in order to extract from the data base the hypothetical drop probability based on parameters comprising the calculated traffic granularity and a link to the link capacity of the link.

Preferably, a plurality of hypothetical drop probabilities is stored in the data base as a look-up table which can provide fast access rates. However, it is also possible to calculate the hypothetical drop probability based on the link capacity, a traffic granularity being determined by the first moment and the variance or by the first moment and second moment of the data rate, and a parameter preferably being a mathematical formula.

According to a preferred embodiment of the invention the data base stores a plurality of hypothetical drop probabilities. Each hypothetical drop probability is assigned to a relative mean data rate and a relative link capacity. The relative mean data rate is determined by the ratio of a mean data rate to a link capacity. The relative link capacity is determined by the ratio of said link capacity to a traffic granularity. The quality accounting unit extracts from the data base the hypothetical drop probability based on the parameters: a relative mean data rate and a relative link capacity of the link. The mean data rate is determined by the measured data rate. The traffic granularity is associated with the link providing the link capacity. By assigning the hypothetical drop probability to the relative mean data rate and the relative link capacity it is possible to improve the access rate of the data base being preferably a look-up table.

According to a preferred embodiment of the invention the quality accounting unit adds to the first moment a hypothetical load increment to obtain a parameter. Preferably, the hypothetical load increment is an additional load that one intends to put on the link in future. Thereby, it is possible to check if the link capacity of the link is exceeded by the data rate and/or it is possible to determine how much the additional load would increase the hypothetical drop probability. The hypothetical load increment can be used to test the stability of the communication network and/or the link. Preferably, the hypothetical load increment, the first moment of the data rate and/or the hypothetical drop probability are inserted in a header of a data packet of the data traffic through the link.

Preferably, the link capacity is a technical hardware or software limitation of the link.

According to a preferred embodiment of the invention the quality accounting unit selects the hypothetical drop probability based on a link capacity of the link, the determined traffic granularity and the first moment from the data base. In order to select these values the quality accounting unit can access the data base. The quality accounting unit selects a further hypothetical drop probability based on the link capacity of the link, the determined traffic granularity and the parameter from a data base. Preferably, a quality accounting unit of a node of the communication network inserts in and/or extracts from a header field of data packet of the data traffic the hypothetical drop probability and/or the further hypothetical drop probability. The quality accounting unit and/or a management module of the communication network uses the hypothetical drop probability and the further hypothetical drop probability for predicting a quality of service provided through the communication network. The management module of the communication network can be provided by an administration node or a middle ware of the communication network. The management module can update routing services or routing tables for routing the data traffic through the communication network preferably at the nodes of the communication network. The nodes are preferably routers or switching nodes of the communication network.

It is also possible, that the quality accounting unit calculates the hypothetical drop probability based on a link capacity of the link, the determined traffic granularity and the first moment. The quality accounting unit calculates the further hypothetical drop probability based on a link capacity of the link, the determined traffic granularity and the parameter. The parameter is preferably the first moment increased by a constant offset according to an intended load increase. The accounting unit and/or a management module of the communication network use the hypothetical drop probability and the further hypothetical drop probability for predicting a quality of service provided through the communication network.

According to a preferred embodiment of the invention the quality accounting unit accesses a data base and extracts from the data base the link capacity of the link. It is possible that the link capacity depends on the link and thereby the link capacity can be different for different links and/or different output line cards. The quality accounting unit calculates the hypothetical drop probability based on the measured data rate and the extracted link capacity of the link.

According to a preferred embodiment of the invention the quality accounting unit extracts a path quality from a header field of an incoming data packet. Preferably, the path quality is a value indicating the QoS of the routing path of the data traffic, wherein the node which sent a data packet of the data traffic has placed the path quality as initial path quality in the header field of the incoming data packet. The quality accounting unit replaces the header field with an updated path quality. The updated path quality depends on the path quality and on the hypothetical drop probability before transmitting the data packet. Preferably, the updated path quality is the sum of the path quality, the hypothetical drop probability and the negative product of the path quality and the hypothetical drop probability.

According to a preferred embodiment of the invention a receiving network node of the communication network sends an updated path quality as an expected total path quality back to the sending network node of the communication network. The sending network node may hereafter also be named sender or sending node. The receiving network node may hereafter also be named receiver or receiving node. The receiving network node provides the expected total path quality to the nodes of the communication network transmitting the data traffic. The receiving network node and the sending network node transmit the data traffic. The data traffic comprises the data packet. When a data packet arrives at a quality accounting unit it carries the accumulated hypothetical drop probability so far, which indicates the upstream path quality. The quality accounting unit calculates an expected downstream path quality based on the expected total path quality and the path quality, which is the upstream path quality. Preferably, the expected downstream path quality is the ratio of the difference of the expected total path quality and the path quality, which is the upstream path quality, to the difference of numerical 1 and the path quality, which is the upstream path quality.

According to a preferred embodiment of the invention the quality accounting unit sends the hypothetical drop probability to a management module of the communication network. The management module receives the hypothetical drop probability. The management module updates routing data and/or a quality metric stored in a data base of the management module. The management module sends the updated routing data and/or quality metric to nodes of the communication network for adapting a switching matrix of the nodes.

These as well as further features and advantages of the invention will be better appreciated by reading the following detailed description of presently preferred exemplary embodiments taken with the accompanying drawings of:

Figure 1    shows a schematic sketch of a node 1 of a communication network.

Figure 2    shows a schematic sketch of a quality accounting unit 10q of the node 1 of Fig. 1.

Figure 3    shows a graph of plurality of hypothetical drop probability data provided by a look-up table.

Figure 4    shows a schematic sketch of the communication network 100 comprising the node 1 shown in Fig. 1.

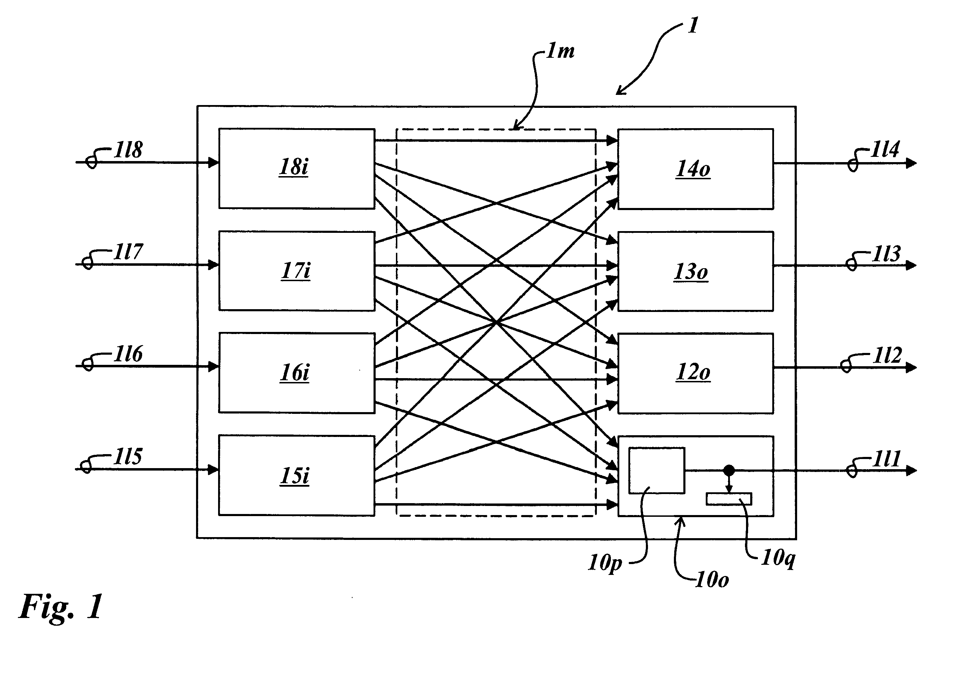

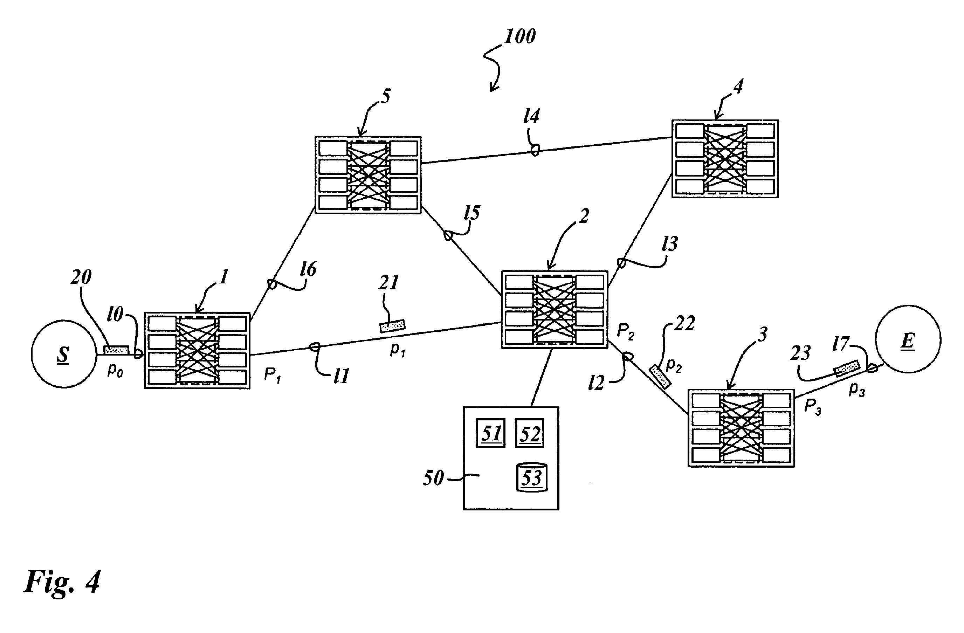

Figure 1 shows a node 1 of a packet based communication network 100 as shown in Fig. 4. The node 1 is preferably a switching node or router of the communication network 100. The node 1 comprises input line cards 15i, 16i, 17i and 18i for receiving via input links 115, 116, 117 and 118 respectively incoming data packets send by other nodes of the communication network 100. The node 1 comprises a switching matrix 1 m assigning the received incoming data packets to output line cards 100, 120, 130 and 140 for switching the data traffic via output links 111, 112, 113 and 114 respectively to further nodes of the communication network 100. In the following it is referred to the input link and output link - as a linguistic abbreviation - as link. The output line card 100, preferably as well as the other output line cards 120, 130 and 140, comprises a packet processing unit 10p and a quality accounting unit 10q. The packet processing unit 10p and/or the quality accounting unit 10q are adapted to intercept data packets of the data traffic transmitted through the link 111. However, it is also possible that the packet processing unit 10p and/or the quality accounting unit 10q are provided by an input line card. The packet processing unit 10p can apply packet labeling and/or relabeling, packet statistic enquiries and packet manipulation operations to data packets of the data packet preferably used to enhance the routing performance of the communication network 100.

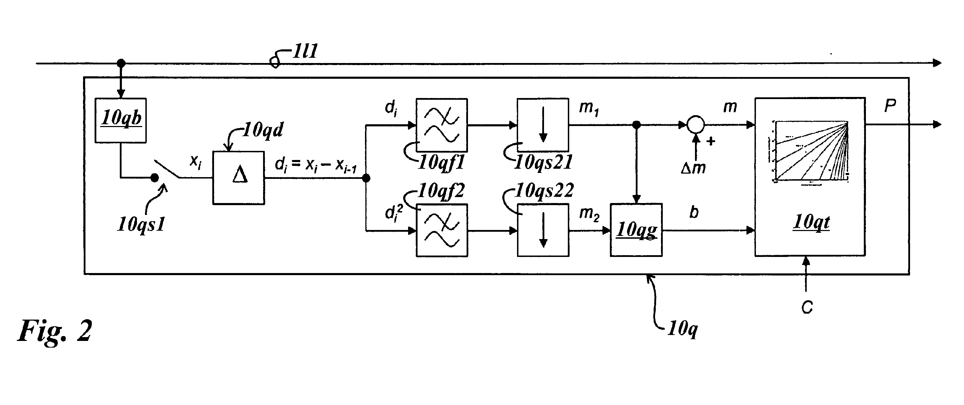

Figure 2 shows a schematic sketch of a quality accounting unit 10q of the node 1 of Fig. 1. The quality accounting unit 10q comprises a byte counter 10qb, a sampling module 10qs1, a difference module 10qd, a first low pass filter 10qf1, a second low pass filter 10qf2, a first down sample module 10qs21, a second down sample module 10qs22, a traffic granularity calculation module 10qg and a data base 10qt preferably providing a look-up table. The determination of the hypothetical drop probability P is briefly described as follows: The byte counter 10qb together with the sampling module 10qs1 and the difference module 10qd determine data rates $d_i$ of the data traffic transmitted through the link 111 for time periods of length $T_1$. The first low pass filter 10qf1 with a time constant $T_2 > T_1$ and with the first down sample module 10qs21 determine together a first moment $m_1$ of the data rates $d_i$. The second low pass filter 10qf2 with the time constant $T_2 > T_1$ and with the second down sample module 10qs22 determine together a second moment $m_2$ of the data rates $d_i$, wherein the second moment $m_2$ is the first moment of the squared data rates $di^2$. The traffic granularity calculation module 10qg determines a traffic granularity b based on the first moment $m_1$ and the second moment $m_2$. A, preferably positive, hypothetical load increment $\Delta m$ is added to the first moment resulting a parameter m which corresponds to the mean data rate $m_1$ with the offset $\Delta m$, i.e. the hypothetical load increment $\Delta m$. The offset $\Delta m$ can account for unexpected and future link loads of the link 111. Finally, by accessing the data base 10qt, the hypothetical drop probability P is extract based on the parameter m, the traffic granularity and the link capacity C. Preferably, modules and units of the node 1 and/or the output line card 100 are provided by hardware and/or software means.

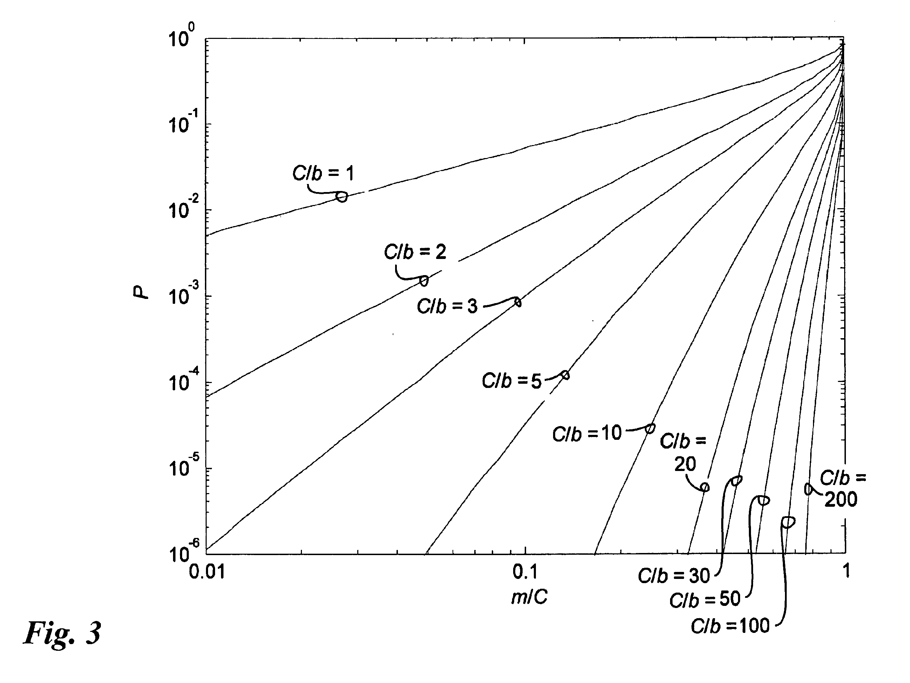

Figure 3 shows a graph of plurality of hypothetical drop probability data provided by a look-up table. The look-up table is provided by the data base 10qt. The hypothetical drop probability or packet drop probability P is plotted in a doubly logarithmic graph as function of the carried link load, which is the relative mean data rate m/C. Hypothetical drop probabilities P for different relative link capacities C/b=1, 2, 3, 5, 10, 20, 30, 50, 100, and 200 are plotted. The hypothetical drop probability data P as shown in Fig. 3 can stored a in the data base 10qt as look-up table having at least two dimensions. The look-up table assigns hypothetical drop probability P values to combinations of relative mean data rate m/C values and relative link capacities C/b values. For example, indices of a dimension of the look-up table are assigned to the relative mean data rate m/C values and other indices of another dimension are assigned to the relative link capacities C/b values. The hypothetical drop probability data values stored in the look-up table can be determined by a simulation, a mathematical model, and/or a measurement. Fig. 3 shows an example of possible data comprised by the look-up table.

Figure 4 shows a schematic sketch of the communication network 100 comprising the node 1 shown in Fig. 1. The communication network 100 comprises the nodes 1, 2, 3, 4 and 5. However, the communication network 100 may comprise even more than five nodes. Each node 1, 2, 3, 4, 5 is a switching node corresponding to that shown in Fig. 1. The nodes 1, 2, 3, 4, 5 are interconnected by links 11, 12, 13, 14, 15, 16. The communication network 100 comprises a sending network node S and a receiving network node E connected to the node 1 with a link 10 and to the node 3 with a link 17 respectively. The communication network comprises a network management module 50. The network management module 50 comprises a control unit 51, a network interface 52 for connecting to the communication network 100 and a data base 53 comprising data associated with routing data of the communication network 100.

Furthermore, Fig. 4 shows an exemplary routing path of a data packet sent form a sending network node S. The sender S, i.e. the sending network node S, sends the data packet 20 to the node 1 through the link 10, wherein the sender S provides in the header field of the data packet 20 a path quality $p_0$ with $p_o=0$ as initial value. The node 1 receives the data packet 20 at one of its input line cards, replaces the path quality $p_0$ in the header field of the data packet 20 with an updated path quality $P_1 = P_1$, wherein $P_1$ is the hypothetical drop probability $P_1$ determined by the quality accounting unit 10q of the node 1. The node 1 sends the data packet 21 to the node 2 through the link 11. The node 2 receives the data packet 21 at one of its input line cards, replaces the path quality $p_1$ in the header field of the data packet 21 with an updated path quality $p_2 = P_1 + P_2 - p_1 P_2$, wherein $P_2$ is the hypothetical drop probability $P_2$ determined by the quality accounting unit 10q of the node 2. The node 2 sends the data packet 22 to the node 3 through the link 12. The node 3 receives the data packet 22 at one of its input line cards, replaces the path quality $P_2$ in the header field of the data packet 22 with an updated path quality $p_3 = P_2 + P_3 - P_2 P_3$, wherein $P_3$ is the hypothetical drop probability $P_3$ determined

by the quality accounting unit 10q of the node 3. The node 3 sends the data packet 23 to the receiving network node E through the link 17.

In following preferred embodiments of the present invention and its motivation in more detail are described as follows by referring to Figs. 1 to 4:

First, to start with the problems to be solved by embodiments according to the present invention are descried in more detail:

Congestion of data traffic in general purpose data packet communication networks is a well known effect that cannot be fully excluded. It is caused by the unavoidable mismatch between the random data traffic offer from outside of the communication network and the fixed and dedicated installed transmission capacity inside the communication network. The equilibrium between both is typically reached by non-technical but rather by economic factors like price and risk. QoS architectures can be in place to deal with this congestion. They can be mostly grouped in the two categories prioritization (e.g. diffServ, i.e. Differentiated Services) and reservation (e.g. intServ, i.e. Integrated Services). Prioritization can move some, but not necessarily all, risks of congestion from a privileged traffic class to another less privileged class. Reservation moves the risk of congestion from traffic degradation onto admission blocking at connection setup time. But neither of both removes the congestion in total. Therefore, many network architects are not trying anymore to suppress congestion. In contrast they try to make congestion obvious to all involved parties. End-user applications, routing engines, placement of content, but also pricing and investment decisions could benefit from transparent exposure of congestion.

Congestion can typically be quantified by its traffic degrading effects, which are in particular (a) packet loss, (b) delay and jitter, and (c) throughput degradation of elastic traffic (TCP). However, all of them suffer from two major problems: At first, stable quantification can be given only as long as data traffic degradation is present. Good quality cannot be quantified (e.g. zero loss, no matter how far it is from the limit). Secondly, data traffic degradations are highly non-stationary and bursty. Measurements, e.g. measurements of available bandwidth or transmission times of data packets from the sending network node to the receiving network node, may converge extremely slowly. At good quality levels with infrequent traffic degradations the convergence is especially slow. Slow convergence is particularly problematic due to the non-stationarity of data traffic conditions.

Embodiments according to the present invention have the advantage to overcome these two problems. They can quantify the degradation potential of actual data traffic fluctuations, which could translate at least into one of packet loss or queuing delay or throughput degradation, depending on the particular circumstances (buffer size, flow length, traffic type, etc.). According to embodiments of the present invention a quality indicator, i.e. the hypothetical drop probability, is assigned to the data traffic on a link that can be congruent to the packet loss probability under the assumption of inelastic data traffic with comparably small buffers. However, in case of large buffers the actual packet loss ratio can be smaller than predicted by the quality indicator, but at the expense of corresponding spikes of queuing delay. In case of elastic data traffic the packet loss ratio can be smaller, too, but this time at the expense of TCP flow rate degradation. The proposed quality indicator can take into account all traffic fluctuations (at all the time) and not only the infrequent overflow events. This way it converges much faster than typical packet loss metrics. And, since the quality indicator is a calculatory value, it is also able to quantify essentially uncongested traffic. This way e.g. a quality degradation from $10^{-8}$ to $10^{-6}$ hypothetical packet loss ratio could be detected as an early warning, where real packet loss accounting would yield most likely an indistinguishable zero.

It can be assumed that aggregated packet traffic is made of an ever changing overlay of short lived application streams. The number of streams that constitute aggregated data traffic in average is decisive for the degree of volatility of the total data traffic. The volatility of data traffic in turn, together with the limitation by the finite transmission capacity of the communication network, is the reason behind quality degradations (packet loss, delay bursts, or throughput degradation). The data stream granularity can be expressed differently, e.g. in number of data streams or by its reverse, the average bit rate of a data stream, in conjunction with the scaling factors traffic load (m) or link capacity (C). Data stream granularity is also called traffic granularity.

Embodiments in accordance with the present invention can be implemented in part or in total into the packet processing unit 10p and/or the quality accounting unit 10q of a line card, preferably the output line card 10o of the node 1 as shown in Fig. 1.

In more detail the method for determining the path quality specified by the hypothetical drop probability is shown in Fig. 2. A first averaging device, e.g. comprising the byte counter 10qb, the sampling module 10qs1 and the difference module 10qd, calculates the mean traffic load on a time scale $T_1$, in the range of few milliseconds, i.e. it calculates the data rate $d_i$. In its simplest forming it is given by the increments of a byte counter 10qb that is regularly read out at distance $T_1$, which is the time period. In a next step a mean value $\mu$ and a variance $v$ of the output signal $d_i$ from the first averaging device can be estimated. In particular a sliding average of the signal itself $m_1$ and a sliding average of the square of the signal $m_2$ is calculated. The averaging devices are preferably digital low pass filters 10qf1, 10qf2 with identical monotonic (non-overshooting) step response 10qs21, 10qs22. The averaging duration $T_2$ should be much larger than typical application stream durations, preferably in the range of 1 to 15 minutes. Taking the two outputs $m_1$

and $m_2$ one can calculate the sliding estimations of $\mu$ and $v$ and of the stream granularity, i.e. the traffic granularity, $b$ (expressed as average bit rate of the constituting application streams):

$$\mu = m_1 \qquad (1)$$

$$v = m_2 - m_1^2 \qquad (2)$$

$$b = \frac{v}{\mu} \qquad (3)$$

With the estimated stream granularity b, the observed mean load m - which is $m_1$ if no additional offset $\Delta$m is considered - and the link capacity C one can calculate the expected packet drop probability P according to the diagram of Fig. 3. The information of the diagram of Fig. 3 can be stored in the data base 10qt and accessed by the quality accounting unit 10q as described in the above. The implementation of the information of the diagram of Fig. 3 could be done by a lookup table, a simplified approximation, a combination of both or a calculation.

For the moment no additional offset $\Delta$m is considered. i.e.:

$$m = m_1 \qquad (4)$$

The described method is inherently a chain of low pass filters. Thus stepwise down-sampling can be applied up to output values with update frequencies in the range of minutes. Only the first byte counter 10qb has to be implemented in the fast path of a packet processing line card, i.e. the output card 100.

In another embodiment, the method, as described above, is executed on output line cards 100, 120, 130 and 14o of a packet switch 1 as shown in Fig. 1. The packet drop probabilities are calculated continuously as quality metric of the data traffic through the output links 111, 112, 113 and 114. Connection or path oriented protocols could be extended to make use of the quality metric values on all links along a path, e.g. the path defined by the links l0, 11, 12, and 17 as shown Fig. 4. Since the quality metric is inherently a packet drop probability, it can be concatenated into a path quality metric by incremental update of a corresponding protocol field in a packet header that is traversing the path.

The concatenation works as follows: A packet at entry, e.g. the sending network node S, to the path is assigned a quality metric value of zero ($p_o$=0). Suppose the current quality metric value on the output line card of the $i^{th}$ intermediate node along the path is $P_i$, then the quality metric value $p_i$ in the packet updates according to

$$p_i = p_{i-1} + P_i - p_{i-1}P_i \qquad (5)$$

The end node, e.g. the receiving network node E, of a path interprets the quality metric value $p_n$ of a received packet as path quality value; in the present example shown in Fig. 4 this quality metric value is the value $P_3$. A bi-directional protocol could signal the path quality value back the sender S.

The procedure is not restricted to a particular packet type. It could be a special purpose OAM packet (OAM = operation, administration, and maintenance) that is send out regularly or on request, e.g. an extended ping (which would be the least intrusive implementation). But it could also be part of a packet in a connection initiation protocol. And it could be a header field in an ongoing communication, e.g. an extension to the TCP header.

Finally, the quality metric values could not only be feed back from the receiver E back to the sender S, but the values could be re-inserted in an additional protocol field as "expected quality" in the next round trip (or re-feedback). Since the quality metric values are only slowly changing, the concatenated path quality field $p_i$ should reach a similar value as the "predicted quality" at the end of the journey along the path. Intermediate nodes, e.g. the nodes 1, 2 and 3, however, could make use of the value pair "path quality so far," $p_i$, and "expected total path quality," d, to calculate an "expected downstream quality", $q_i$, with

$$q_i = \frac{d - p_i}{1 - p_i} \qquad (6)$$

The expected downstream path quality $q_i$ is of particular benefit for initiation of re-routing and load balancing, but also service and content placement in cloud networks.

In a further embodiment, the path quality metric is not only concatenated "as is", but with an hypothetical load increment, $\Delta m$. The additional parameter is carried in a OAM packet, e.g. an OAM packet, that is traversing the path. Accordingly, equation (4) can be replaced by

$$m = m_1 + \Delta m \qquad (7)$$

The look-up of the function of Fig. 3 by accessing the data base 10qt is done with unchanged traffic granularity b but increased load, i.e. the load according to equation (7), wherein $m_1$ is the first moment of the data rate. The first moment of the data rate $d_i$ is the mean load. A differential path quality metric can be obtained that can predict the sensitivity of path quality to further traffic addition, which does not only inform about the actual state and load of the path.

Embodiments of the present invention do not only deal with real packet drops, but can also predict further packet drops. It is possible to quantify the overload probability of the link.

A further advantage of the present invention overcomes the problem that it is hard to assign each local packet drop to a dedicated output queue and it is even harder to collect all those local drop counters into one concentrated drop count per output port when doing a book-keeping method for dealing with packet drops. In contrast to this embodiments of the present invention can be applied just to the output byte counter in front of a link with no regard to the internal structure of node, since the present invention can use a statistical method based on mean values and variances.

Embodiment of the present invention can rely on pre-calculated link quality values, which can be concatenated into a path quality metric in just one round trip time (RTT = round trip time). Thereby it is possible to adapt quickly the routing of the data traffic which has possibly large fluctuations, i.e. a high traffic granularity, and consequently load balance the traffic load on the communication network.

**Claims**

1. A method of determining a path quality in a packet based communication network (100) ,
   wherein the method comprises the steps of:

   measuring, by a quality accounting unit (10q), a data rate ($d_i$) associated with the data traffic transmitted through a link (111) of the communication network (100) at an output line card (100) of a node (1) of the communication network (100), and
   determining, by the quality accounting unit (10q), a hypothetical drop probability ($P_1$) of data transmitted through the link (111) based on the measured data rate ($d_i$) and data extracted from a data base (10qt), the path quality being specified by the hypothetical drop probability ($P_1$).

2. The method of claim 1, wherein the step of measuring the data rate ($d_i$) comprises the steps of:

   repeatedly summing, by a byte counter (10qb) of the quality accounting unit (10q), bytes detected by the byte counter (10qb) during a time period ($T_1$), and
   providing, by a sampling module (10qs1), at the end of the time period ($T_1$) the content of the byte counter as data rate ($d_i$).

3. The method of claim 2, wherein the step of determining the hypothetical drop probability ($P_1$) comprises the step of:

   applying, by the quality accounting unit (10q), a low pass filter (10qf1, 10qf2) with a time constant ($T_2$) to the

data rate ($d_i$) and the squared data rate ($d_i^2$) in order to determine a first moment ($m_1$) and a second moment ($m_2$) of the data rate ($d_i$) respectively.

4. The method of claim 3, wherein the time period ($T_1$) is smaller than the time constant ($T_2$), the time period ($T_1$) being preferably a time period between 1 millisecond and 100 milliseconds and the time constant ($T_2$) being preferably a time period between 0.5 minutes and 100 minutes.

5. The method of claim 3, wherein the step of determining the hypothetical drop probability ($P_1$) comprises the steps of:

   calculating, by the quality accounting unit (10q), a variance of the data rate ($d_i$) using the first moment ($m_1$) and the second moment ($m_2$), and determining, by the quality accounting unit (10q), a traffic granularity (b) based on the ratio of the variance to the first moment ($m_1$).

6. The method of claim 1, wherein the method comprises the steps of:

   providing, by the data base (10qt), a plurality of hypothetical drop probabilities each hypothetical drop probability being assigned to two or more parameters selected from the group of first moment ($m_1$), second moment ($m_2$), variance, traffic granularity (b), mean data rate (m), link capacity (C), relative mean data rate (m/C) and relative link capacity (C/b), the relative mean data rate (m/C) being determined by the ratio of a mean data rate (m) to a link capacity (C) and the relative link capacity (C/b) being determined by the ratio of said link capacity (C) to a traffic granularity (b).

7. The method of claim 1, wherein the step of determining the hypothetical drop probability ($P_1$) comprises the step of:

   extracting from the data base (10qt) the hypothetical drop probability ($P_1$) based on parameters comprising the calculated traffic granularity (b) and the link capacity (C) of the link (111) or based on parameters comprising a relative mean data rate (m/C) and a relative link capacity (C/b) of the link (111).

8. The method of claim 3, wherein the step of determining the hypothetical drop probability ($P_1$) comprises the step of:

   adding, by the quality accounting unit (10q), to the first moment ($m_1$) a hypothetical load increment ($\Delta m$) to obtain a parameter (m).

9. The method of claim 8, wherein the step of determining the hypothetical drop probability ($P_1$) comprises the steps of:

   selecting, by the quality accounting unit (10q), the hypothetical drop probability ($P_1$) based on a link capacity (C) of the link (111), the determined traffic granularity (b) and the first moment ($m_1$) from the data base (10qt), selecting, by the quality accounting unit (10q), a further hypothetical drop probability based on the link capacity (C) of the link (111), the determined traffic granularity (b) and the parameter (m) from a data base (10qt), and using, by the quality accounting unit (10q) and/or a management module (50) of the communication network (100), the hypothetical drop probability ($P_1$) and the further hypothetical drop probability for predicting a quality of service provided through the communication network (100).

10. The method of claim 1, wherein the step of determining the hypothetical drop probability ($P_1$) comprises the steps of:

    accessing, by the quality accounting unit (10q), the data base (10qt) and extracting from the data base (10qt) the link capacity (C) of the link (111), and
    calculating, by the quality accounting unit (10q), the hypothetical drop probability ($P_1$) based on the measured data rate ($d_i$) and the extracted link capacity (C) of the link (111).

11. The method of claim 1, wherein the method comprises the steps of:

    extracting, by the quality accounting unit (10q), a path quality ($P_1$) from a header field of an incoming data packet (21), and
    replacing, by the quality accounting unit (10q), the header field with an updated path quality ($p_2$) which depends on the path quality ($P_1$) and on the hypothetical drop probability ($P_1$) before transmitting the data packet (22).

12. The method of claim 11, wherein the method comprises the steps of:

sending, by a receiving network node (E) of the communication network (100), an updated path quality as an expected total path quality back to the a sending network node (S) of the communication network (100), and providing the expected total path quality to the nodes (1, 2, 3) of the communication network (100) transmitting the data traffic, the receiving network node (E) and the sending network node (S) transmitting the data traffic which comprises the data packet (21, 22), and calculating, by the quality accounting unit (10q), an expected downstream path quality based on the expected total path quality and the path quality ($P_1$).

13. The method of claim 1, wherein the method comprises steps of:

sending, by the quality accounting unit (10q), the hypothetical drop probability ($P_1$) to a management module (50) of the communication network (100),
receiving, by the management module (50), the hypothetical drop probability ($P_1$),
updating, by the management module (50), routing data and/or a quality metric stored in a data base (53) of the management module (50), and sending, by the management module (50), the updated routing data and/or quality metric to nodes (1, 2, 3, 4, 5) of the communication network (100) for adapting a switching matrix of the nodes (1, 2, 3, 4, 5).

14. A quality accounting unit (10q) for determining a path quality in a packet based communication network (100), wherein the quality accounting unit (10q) is adapted to measure a data rate ($d_i$) associated with the data traffic transmitted through a link (1l1) of the communication network (100) at an output line card (100) of a node (1) of the communication network (100), and determine a hypothetical drop probability (P) of data transmitted through the link (111) based on the measured data rate ($d_i$) and data extracted from a data base (10qt), whereby the hypothetical drop probability ($P_1$) specifies the path quality.

15. An output line card (100) for determining a path quality comprising a quality accounting unit (10q) according to claim 14.

*Fig. 1*

EP 2 597 817 A1

**Fig. 2**

*Fig. 3*

Fig. 4

Europäisches
Patentamt

European
Patent Office

Office européen
des brevets

## EUROPEAN SEARCH REPORT

Application Number

EP 11 29 0462

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2003/067877 A1 (SIVAKUMAR RAGHUPATHY [US] ET AL) 10 April 2003 (2003-04-10) * paragraph [0062] * * paragraph [0085] - paragraph [0086] * ----- | 1-15 | INV. H04L12/26 H04L12/56 |
| A | JILIANG WANG ET AL: "QoF: Towards comprehensive path quality measurement in wireless sensor networks", INFOCOM, 2011 PROCEEDINGS IEEE, IEEE, 10 April 2011 (2011-04-10), pages 775-783, XP031953647, DOI: 10.1109/INFCOM.2011.5935299 ISBN: 978-1-4244-9919-9 * abstract * ----- | 1-15 | |
| A | US 2009/245130 A1 (BING BENNY K [US]) 1 October 2009 (2009-10-01) * paragraph [0029] * ----- | 1-15 | |

| | |
|---|---|
| | TECHNICAL FIELDS SEARCHED (IPC) |
| | H04L |

The present search report has been drawn up for all claims

| Place of search | Date of completion of the search | Examiner |
|---|---|---|
| Berlin | 29 December 2011 | Siebel, Christian |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 11 29 0462

This annex lists the patent family members relating to the patent documents cited in the above-mentioned European search report.
The members are as contained in the European Patent Office EDP file on
The European Patent Office is in no way liable for these particulars which are merely given for the purpose of information.

29-12-2011

| Patent document cited in search report | Publication date | Patent family member(s) | Publication date |
|---|---|---|---|
| US 2003067877 A1 | 10-04-2003 | CA 2461926 A1<br>EP 1446916 A1<br>US 2003067877 A1<br>US 2005152397 A1<br>WO 03028296 A1 | 03-04-2003<br>18-08-2004<br>10-04-2003<br>14-07-2005<br>03-04-2003 |
| US 2009245130 A1 | 01-10-2009 | NONE | |

EPO FORM P0459

For more details about this annex : see Official Journal of the European Patent Office, No. 12/82